**Europäisches Patentamt**

**European Patent Office**

**Office européen des brevets**

(19)

(11) Veröffentlichungsnummer: **0 154 716**
**B1**

(12) **EUROPÄISCHE PATENTSCHRIFT**

(45) Veröffentlichungstag der Patentschrift:
**29.06.88**

(21) Anmeldenummer: **84116136.7**

(22) Anmeldetag: **21.12.84**

(51) Int. Cl.⁴: **G 01 F 23/22**

(54) Schaltungsanordnung zur elektrothermischen, Umgebungstemperaturkompensierten Füllstandmessung.

(30) Priorität: **10.03.84 DE 3408824**

(43) Veröffentlichungstag der Anmeldung:
**18.09.85 Patentblatt 85/38**

(45) Bekanntmachung des Hinweises auf die Patenterteilung:
**29.06.88 Patentblatt 88/26**

(84) Benannte Vertragsstaaten:
**DE FR GB IT NL SE**

(56) Entgegenhaltungen:
**DE-A-2 946 585**
**DE-A-3 133 421**
**DE-B-2 740 289**
**US-A-4 356 728**

(73) Patentinhaber: **VDO Adolf Schindling AG,**
**Gräfstrasse 103, D-6000 Frankfurt/Main (DE)**

(72) Erfinder: **Kühnel, Frank, Dipl. -Ing., Bremer**
**Strasse 2-6, D-6236 Eschborn (DE)**

(74) Vertreter: **Klein, Thomas, Dipl.- Ing. (FH), Sodener**
**Strasse 9 Postfach 6140, D-6231 Schwalbach a.**
**Ts. (DE)**

LIBER, STOCKHOLM 1988

**Beschreibung**

Die Erfindung betrifft eine Schaltungsanordnung zur elektrothermischen, Umgebungstemperatur-kompensierten Füllstandmessung nach dem Oberbegriff des Anspruchs 1.

Bei einer derartigen bekannten Schaltungsanordnung wird die Widerstandssonde mit jedem Meßbeginn (Beginn einer Meßperiode) an die Konstantstromquelle gelegt, die während der Aufheizzeit von einer Ablaufsteuerung (Verzögerungsschaltung) betätigt ist. Letztere steht mit dem Vergleicher in Verbindung. Der Vergleicher ist einerseits mit einem an die Widerstandssonde angeschlossenen Inverter und einem dazu parallelgeschalteten Widerstandskondensatorglied verbunden, und zwar so, daß der Vergleicher ein Ausgangssignal an eine Überwachungsvorrichtung abgibt, sobald die über das Widerstandskondensatorglied abfallende Spannung gleich derjenigen des Inverters ist (DE-OS-2 740 289). Das Meßprinzip beruht darauf, daß die Widerstandsänderung der Widerstandssonde, die mehr oder weniger von dem zu messenden Fluid umgeben ist, gemessen wird, die sich am Ende einer Aufheizzeit durch einen Konstantstrom einstellt. Üblicherweise wird dabei die Differenz der Spannung $U_1$ am Ende der Aufheizzeit gegenüber einer Anfangsspannung $U_0$ zu deren Beginn erfaßt. Damit das Ergebnis dieser Messung unabhängig von der Umgebungstemperatur ist, wird nach diesem Stand der Technik im einzelnen vorgesehen: Der Inverter liefert zum Zeitpunkt des Einschaltens der Widerstandssonde eine Spannung $V-U_0$, die den Kondensator des Widerstandskondensatorglieds auflädt. Dieser entlädt sich dann nach einer bekannten Gesetzmäßigkeit, die durch den Widerstandswert und die Kapazität bestimmt ist. Wenn sich im weiteren Verlauf der Aufheizzeit die Widerstandssonde erwärmt, nimmt die Spannung $U$ zu und der Inverter liefert eine Spannung der Form $V-U$, die von der Eintauchtiefe der Widerstandssonde abhangig ist. Mit dem Vergleicher wird der Zeitpunkt erfaßt, zu dem der Spannungsverlauf des Kondensators (Aufladungskurve), der als Gerade darstellbar ist, die Kurve der invertierten Spannung $V-U$ schneidet. Zu einem durch die Ablaufsteuerung bestimmten Zeitpunkt wird der Vergleicher so gesteuert, daß ein Vergleich zwischen dem Wert der invertierten Spannung $V-U_0$ an den Anschlüssen des Widerstandskondensatorglieds und dem Wert der an dem Inverter liegenden Spannung durchgeführt wird. Eine mit dem Ausgang des Vergleichers verbundene Überwachungsvorrichtung kann hierbei bei Überschreiten eines vorgebbaren Schwellwerts einen Alarm auslösen. - Generell kann nach diesem Stand der Technik auch das Niveau einer Flüssigkeit angezeigt werden, in welches die Widerstandssonde eintaucht, und zwar mit numerischen oder analogen Anzeigeinstrumenten. - Diese Schaltungsanordnung ist insbesondere wegen des vorgesehen Inverters verhältnismäßig aufwendig. Darüber hinaus ist nicht ersichtlich, wie diese Schaltungsanordnung zur Bildung numerischer Anzeigewerte in einen Analogdigitalumsetzer integriert werden kann.

Weiterhin ist eine Schaltungsanordnung ähnlich der gattungsgemäßen Art zur elektrothermischen Füllstandsmessung mit einer durch einen Konstantstrom beheizten Widerstandssonde, mit einer eine von dem Eintauchzustand der Widerstandssonde abhängigen Meßspannung auswertenden Auswertschaltung, in die zur Temperaturkompensation außerdem eine Kombinations-Spannung einspeisbar ist, vorgeschlagen worden, bei der von der Widerstandssonde zu Beginn der Aufheizzeit die Komensationsspannung abfragbar und speicherbar ist und am Ende der Aufheizzeit die Meßspannung abfragbar ist, (Patentanmeldung P 33 37 779.0). Zur Temperaturkompensation ist die Auswertschaltung zur Bildung des Quotienten aus Meßspannung und Kompensationsspannung während jeder Abtastperiode eingerichtet. Die Meßspannung und die Kompensationsspannung können nach diesem Prinzip auch in einen Analogdigitalumsetzer eingespeist werden, mit dessen Ausgang digitale Speicher und eine digitale Rechenschaltung zur Quotientenbildung in Verbindung stehen. - Diese Schaltungsanordung ist wegen der Mittel zur Quotientenbildung verhältnismäßig aufwendig. Dies gilt bei einer Ausführung der Auswertschaltung in Analogtechnik zur Bildung des Quotienten und besonders in der Ausführung in Digitaltechnik, da hier der Analogdigitalumsetzer zunächts die Meßspannung und die Kompensationsspannung umzusetzen hat, bevor deren digitalisierte Größen weiter ausgewertet werden können.

Der vorliegende Erfindung liegt daher die Aufgabe zugrunde, eine Schaltungsanordnung der eingangs genannten Gattung so weiterzubilden, daß sie bei einfachem Aufbau und hoher Genauigkeit zur Abgabe digitalisierter Füllstandswerte geeignet ist und hierzu besonders leicht in einen entsprechenden Umsetzer integrierbar ist.

Diese Aufgabe wird in einer ersten Variante nach der in dem Anspruch 1 gekennzeichneten Erfindung gelöst.

Nach dieser Variante erfolgt die Umgebungstemperaturkompensation bzw. die Normierung der an der Widerstandssonde erfaßten Temperaturdifferenz zwischen Aufheizspannung $U_1$ und Anfangsspannung $U_0$ bezogen auf die Anfangsspannung $U_0$ durch Vergleich der erfaßten Aufheizspannung zu der zuvor erfaßten und anschließend auf integrierten Anfangsspannung. Der Temperaturgang der Widerstandssonde wird dabei durch eine Quotientenbildung kompensiert.

Der diesen Vergleich durchführende Komparator kann nach Anspruch 3 zweckmäßig zum Bestandteil eines nach dem Sägezahnverfahren arbeitenden Analogdigitalumsetzers gemacht werden, der mit einer Zählfrequenz die Zeit digitalisiert, die zwischen dem Erreichen der Aufheizspannung durch die integrierte Anfangsspannung einerseits und dem Beginn des Vergleichs liegt.

Der Integrator kann dabei wenig aufwendig und genau arbeitend mit einem Operationsverstärker und einem Kondensator in dessen Rückkopplungszweig aufgebaut sein.

Es wird noch bemerkt, daß die Genauigkeit des Meßprinzips nach der ersten Variante durch Anwendung eines Umsetzers, der nach dem Zwei-Rampenverfahren arbeitet (Dual-Slope-Umsetzer mit Nullpunktkorrektur) noch steigern läßt.

Eine zweite Variante zur erfindungsgemäßen Lösung der Aufgabenstellung ist in dem kennzeichnenden Teil des Anspruchs 4 angegeben.

Hier efolgt mit einfachsten Mitteln eine Quotientenbildung bzw. Normierung auf die Anfangsspannung $U_0$. Der normierte Wert wird wie bei der ersten Variante als Zeit zwischen Betätigung des zweiten Abtast- und Halteglieds bzw. Abtasten der Aufheizspannung und Umschalten des Komparators erfaßt. Auch diese Zeit kann wie in der ersten Variante nach dem Sägezahnverfahren in einem integrierten Analogdigitalumsetzer in einen digitalen Niveauwert umgesetzt werden. Der Vergleich zwischen der Anfangsspannung und der entsprechend dem Widerstand und dem Kondensator zeitvariablen abgetasteten Aufheizspannung wird hier besonders wenig aufwendig durchgeführt: An den Eingängen des hierzu vorgesehenen Komparators liegen direkt beide Abtast- und Halteglieder sowie der den Kondensator des zweiten Halteglieds entladende Widerstand. - Allerdings beinhaltet hier die durch Umschalten des Komparators markierte Zeit nicht proportional die auf die Anfangsspannung normierte Differenz zwischen Aufheizspannung und Anfangsspannung, sondern einen logarithmischen Wert des Quotienten Aufheizspannung zu Anfangsspannung. Mit relativ kleinem Linearitätsfehler entspricht jedoch der Logarithmus diese Quotienten dem Quotienten selbst. Die Linearitätsabweichung kann in vielen Fällen in Kauf genommen werden, da die Kennlinie der Widerstandssonde an den jeweiligen Meßort, insbesondere einen Kraftfahrzeugtank anzupassen ist.

Höhere Anforderungen an die Linearität können aber auch nach der zweiten Schaltungsvariante gemäß Anspruch 5 durch Hinzunahme eines quadratischen Glieds der am Komparator ermittelten Zeitdauer erfüllt werden.

Unter bestimmten Bedingungen, auf die noch weiter unten eingegangen wird, kann die Schaltungsanordnung nach der zweiten Variante der Erfindung noch weiter durch die Maßnahmen nach dem unabhängigen Anspruch 6 vereinfacht werden. - Es entfällt hierbei also ein Abtastschalter und die zugehörige Steuerung.

Zur Lösung der erfindungsgemäßen Aufgabe ist eine dritte Variante in dem kennzeichnenden Teil des Anspruchs 7 angegeben.

Diese dritte Variante hat die zusätzlichen Vorteile, daß geringere Anforderungen an den Komparator und die Abtastschalter zu stellen sind, d.h. entsprechend weniger aufwendige Elemente genügen. - In einem Komparator, dessen einer Eingang mit der durch ein Widerstandskondensatorglied entladenen Anfangsspannung und anschließend entladenen Aufheizspannung beaufschlagt wird, erfolgt ein Vergleich mit einer konstanten Referenzspannung. Der Komparator steuert hier einen Vorwärts-Rückwärts-Zähler, der einen Zählwert entsprechend dem Logarithmus aus dem Quotienten zwischen Aufheizspannung zu Anfangsspannung auszählt. - In den Zählwert gehen Schwankungen der Referenzspannung und der sogenannten Offset-Spannung des Komparators nicht ein, wenn diese Werte während einer Meßperiode sich nicht ändern.

Der sonst in den Zählwert eingehende Einfluß der Zeitkonstante des Widerstandskondensatorglieds kann vorteilhaft nach Anspruch 8 eliminiert werden. Nach der Weiterbildung gemäß Anspruch 8 kann ein Ausgangssignal für minimalen Füllstand eingestellt werden.

Gemäß Anspruch 9 kann die Schaltungsanordnung in der dritten Variante so ausgebaut werden, daß sie sich zur Abgabe eines Warnsignals bei Über- oder Unterschreiten eines Warnniveaus zusätzlich eignet.

Die Erfindung wird im folgenden anhand einer Zeichnung mit acht Figuren näher erläutert. Es zeigen:

Figur 1 eine Schaltungsanordnung zur elektrothermischen Füllstandmessung in einer ersten Variante;

Figur 2 Zeitabläufe hierin erfaßter Spannungen;

Figur 3 eine Schaltungsanordnung zur elektrothermischen Füllstandmessung in einer zweiten Ausführungsform;

Figur 4 Zeitabläufe der in der Schaltungsanordnung nach Figur 3 erfaßten Spannungen;

Figur 5 eine Variante der Schaltungsanordnung nach Figur 4;

Figur 6 eine Gesamt-Schaltungsanordnung zur elektrothermischen Füllstandmessung in einer dritten Variante;

Figur 7 Zeitabläufe von Schalterstellungen in der Schaltungsanordnung nach Figur 6;

Figur 8a in der Schaltungsanordnung nach Figur 6 erfaßte zeitvariable Spannungen und

Figur 8b aus den Zeitabläufen gemäß Figur 8a abgeleitete Zählerstände eines Vorwärts-Rückwärts-Zählers in Figur 6.

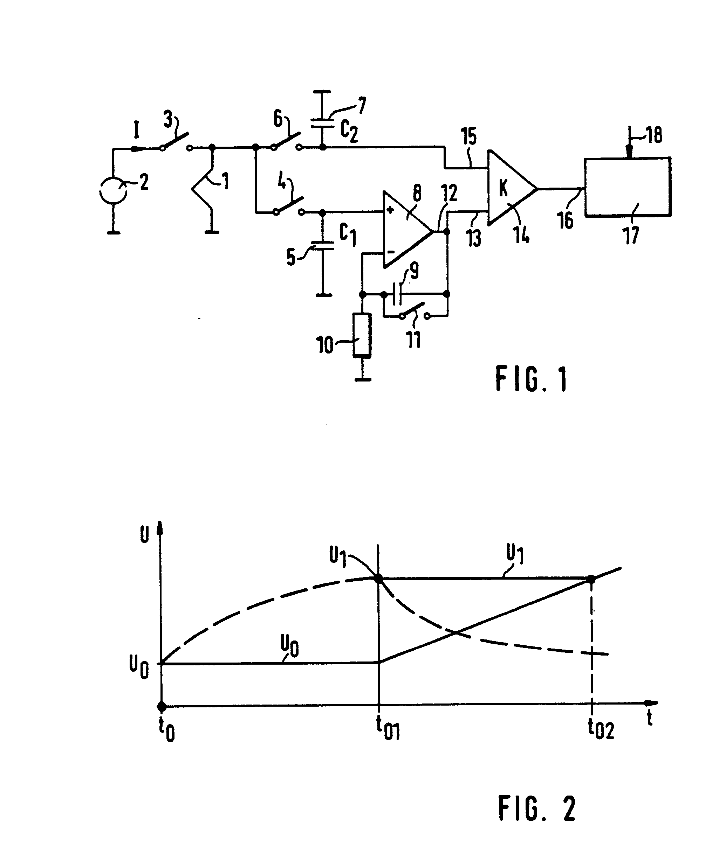

In Figur 1 ist eine erste Variante der Auswerteschaltung zur Auswertung des an einer Widerstandssonde 1 entstehenden Spannungsabfalls zur Niveaumessung dargestellt. Die Widerstandssonde wird von einer Konstantstromquelle 2 über einen gesteuerten Schalter 3 mit einem getakteten Konstantstrom beheizt. Der Schalter 3 wird ebenso wie weitere in Figur 1 gezeigte und nachstehend erläuterte Schalter durch eine nicht gezeichnete Ablaufsteuerung gesteuert.

An die Widerstandssonde sind ein erstes Abtast- und Halteglied, bestehend aus einem Abtastschalter 4 und einem Speicherkondensator 5, sowie ein zweites Abtast- und Halteglied, bestehend aus einem Abtastschalter 6 und einem Speicherkondensator 7, angeschlossen.

Das erste Abtast- und Halteglied 4, 5 ist an einen Eingang (+) eines Integrators angeschlossen, der aus einem Operationsverstärker 8, einem Kondensator 9 im Rückkopplungszweig und einem Widerstand 10 an einem Rückkopplungseingang (-) besteht. Parallel zu dem Kondensator 9 ist ein Rückstellschalter 11 dargestellt.

Ein Ausgang 12 des Integrators ist an einen ersten Eingang 13 eines Komparators 14 gekoppelt. Der zweite Eingang 15 des Komparators steht mit dem Ausgang des zweiten Abtast- und Halteglieds 6, 7 in Verbindung.

Der Ausgang des Komparators ist an einen Steuereingang 16 eines voreinstellbaren Rückwärtszählers 17 angeschlossen, in den über einen Zählfrequenzeingang 18 Zählfrequenzimpulse eingespeist werden.

Durch den mit der Ablaufsteuerung gesteuerten Betrieb der Auswerteschaltung nach Figur 1 laufen folgende Vorgänge in Meßperioden periodisch ab: Zunächst wird zu Beginn einer Aufheizzeit $t_0$ der gesteuerte Schalter 3 geschlossen, wodurch an der Widerstandssonde die Anfangsspannung $U_0$ abfällt, siehe Figur 2. Diese Anfangsspannung wird durch kurzzeitiges Schließen des Abtastschalters 4 in dem Speicherkondensator 5 gespeichert. Der Kondensator 9 des Integrators ist jedoch zunächst noch kurzgeschlossen, so daß die Integration noch nicht beginnt. Dies erfolgt erst, nachdem kurz vor Ende der Aufheizzeit zum Zeitpunkt $t_{01}$ der zweite Abtastschalter 6 kurzzeitig geschlossen wird und die dann erreichte Aufheizspannung $U_1$ in dem Speicherkondensator 7 gehalten wird. Jetzt wird der Rückstellschalter 11 geöffnet und die Spannung an dem Ausgang 12 des Integrators steigt deswegen linear mit einer Steigung an, die dem Wert der Ausgangsspannung $U_0$ proportional ist.

Die Anstiegsgeschwindigkeit bzw. die Integrationsgeschwindigkeit ergibt sich dabei aus der Zeitkonstanten

$$T = R_1 \cdot C_1.$$

Die Integration ab $t_{01}$ verläuft so lange, bis zum Zeitpunkt $t_{02}$ die aufintegrierte Anfangsspannung gleich der Aufheizspannung ist. Dann gilt (gerechnet ab $t_{01}$):

$$t_{02} = \frac{U_1 - U_0}{U_0} \cdot T = \frac{\Delta U}{U_0} \cdot T$$

Diese Zeit wird durch den voreinstellbaren Ruckwärtszähler 17 gemessen, der während der Integrationszeit aus der Zählfrequenz f die Anzahl n zählt:

$$n = A \cdot x,$$

wobei gilt:
$$A = b \cdot T \cdot f.$$

Dabei ist b en konstanter Faktor.

Es ist aus der Formel für $t_{02}$ ersichtlich, daß der Temperaturgang des Widerstandsfühlers durch die Quotientenbildung kompensiert ist.

Zusätzlich kann durch Integration der voranstehend beschriebenen Art mit Referenzspannungen $U'_0$, $U'_1$ und aus deren Differenz $\Delta U'$ ein Referenzspannungsverhältnis $\frac{\Delta U'}{U'_0}$ und daraus der Zählwert

$$n' = c \cdot T \cdot f$$

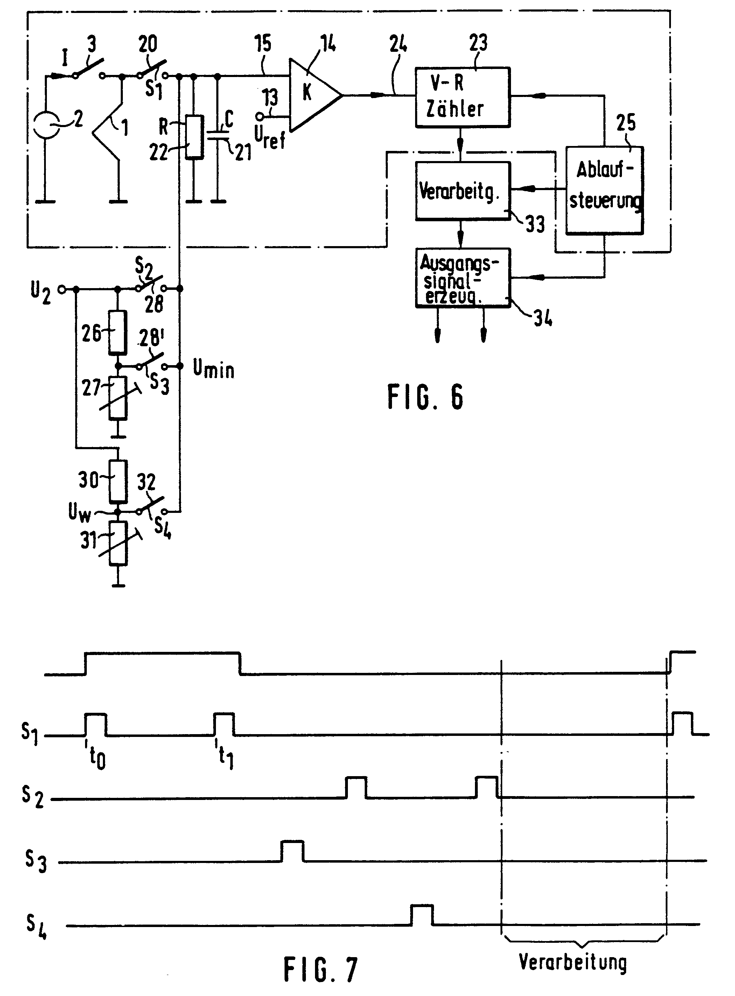

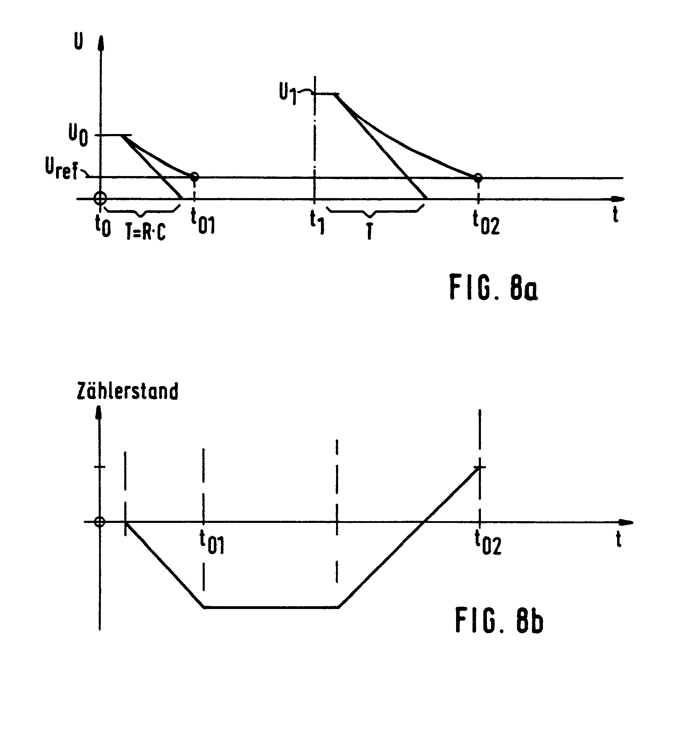

erzeugt werden, wobei c wiederum ein konstanter Faktor ist. Ein anschließendes Rechenwerk (ebenso wie die Referenzspannungsgeber in Figur 1 nicht dargestellt, siehe hierzu Figur 6) bildet den Quotienten:

$$\frac{n}{n'} = \frac{b \cdot T \cdot f}{(c \cdot T \cdot f)}$$

In diesem Quotienten $\frac{n}{n'}$, entfallen die Einflüsse der Zeitkonstanten T und der Zählfrequenz f.

Wenn mit der Zählfrequenz f auch der Meßablauf gesteuert werden soll, ist für die Zählfrequenz eine Genauigkeit von $<1\,\%$ für typische Anwendungsfälle zu fordern.

Zu Figur 2 wird noch vermerkt, daß dort der Spannungsverlauf an der Widerstandssonde mit einer unterbrochenen Linie dargestellt ist.

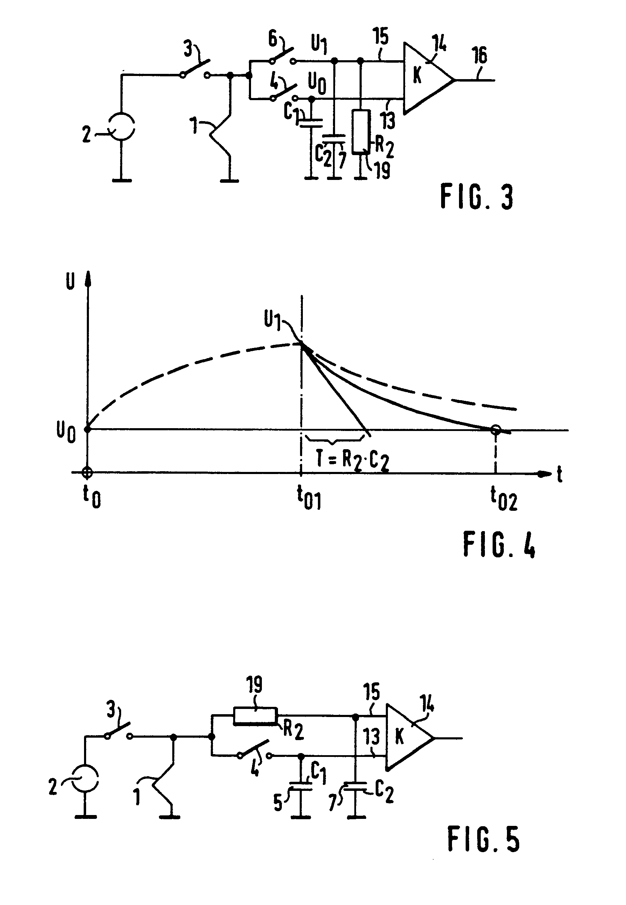

In der Variante der Auswertschaltung nach Figur 3 sind ebenso wie in den Figuren 5 und 6 gleiche Elemente wie in Figur 1 mit übereinstimmenden Bezugszeichen versehen.

Die Auswerteschaltung gemäß Figur 3 kommt gegenüber derjenigen in Figur 1 mit deutlich verringertem Aufwand aus. Insbesondere wurde auf den Integrator verzichtet. Statt dessen ist das erste Abtast- und Halteglied mit dem Speicherkondensator 5 an den ersten Eingang 13 des Kompensators 14 unmittelbar angeschlossen. Der Speicherkondensator 7 des zweiten Abtast- und Halteglieds, der ebenso wie in Figur 1 unmittelbar mit dem zeiten Eingang 15 des Komparators gekoppelt ist, wird hier durch einen Widerstand $R_2$ überbrückt, der das Bezugszeichen 19 trägt. Damit ist der Widerstand 19 so geschaltet, daß er den Speicherkondensator 7 entlädt, und zwar mit der Zeitkonstanten

$$T = R_2 \cdot C_2.$$

Aus dem zugehörigen Zeitdiagramm in Figur 4 ist zu entnehmen, daß zunächst wiederum die Anfangsspannung $U_0$ (an dem Eingang 13) gehalten wird und daß ab dem Zeitpunkt $t_{01}$ der durch kurzzeitige Betätigung des Abtastschalters 6 geladene Kodensator 7 über den Widerstand $R_2$ entladen wird, bis die absinkende Spannung an dem Speicherkondesator 7 gleich der Spannung an dem Speicherkondensator 5 geworden ist. Die Entladung verläuft nach der Zeitfunktion

$$U_{C2} = U_1 \cdot e^{-\frac{t}{T}} \cdot$$

Die Zeit bis zu der diese sinkende Spannung den Wert der Anfangsspannung $U_0$ erreicht ist dann

$$t_{02} = T \cdot 1n \left(\frac{U_1}{U_0}\right).$$

Durch diese Quotientenbildung erfolgt also auch hier die Temperaturkompensation der Aufheizspannung. Zusätzlich kann der Einfluß der Zeitkonstanten T, wie voranstehend beschrieben, aus dem Referenzspannungsverhältnis $\frac{\Delta U'}{U_0}$ kompensiert werden.

Der Auswerteschaltung nach Figur 3 wird allerdings der Quotient $\frac{U_1}{U_0}$ gebildet und nicht wie mit der Auswerteschaltung nach Figur 1 $\frac{\Delta U}{U_0}$. Außerdem wird wird aus dem genannten Spannungsverhältnis mit der Auswerteschaltung nach Figur 3 die Zeit $t_{02}$ in logarithmischer und nicht in linearer Abhängigkeit gebildet. Näherungsweise ergeben sich dabei jedoch ähnliche Verhältnisse wie in der Schaltungsanordnung nach Figur 1, da $\frac{U_1}{U_0}$ ausgedrückt werden kann als

$$\frac{(U_0 + \Delta U)}{U_0} = 1 + \frac{\Delta U}{U_0}.$$

Eingesetzt in die obengenannte logarithmische Beziehung für $t_{02}$ ergibt sich dann, da $\frac{\Delta U}{U_0}$ klein ist (etwa 0,1)

$$t_{02} \approx T \cdot \frac{\Delta U}{U_0}$$

Die Linearitätsabweichung ist dabei kleiner als 5 %. Die Linearität kann durch Hinzunahme eines quadratischen Gliedes auf den Wert 1,5 % verbessert werden;

$$t'_{02} = t_{02} + t_{02/2}^2.$$

Wie erwähnt kann jedoch statt dessen auch die Linearisierung durch Kennlinienanpassung der Widerstandssonde erfolgen.

Die Auswerteschaltung nach Figur 5 stellt eine Vereinfachung der Auswerteschaltung nach Figur 3 dar: Der die Ableitung der Spannung an dem Speicherkondensator 7 mit dem Wert $C_2$ bewirkende Widerstand 19 mit dem Wert $R_2$ ist hier nicht parallel zu dem Speicherkondensator 7 geschaltet, sondern ist anstelle des Abtastschalters 5 in die Schaltungsanordnung eingefügt.

Somit wird der Speicherkondensator 7 ab dem Zeitpunkt $t_{01}$, wenn der Konstantstrom mit dem gesteuerten Schalter 3 abgeschaltet wird, über den Widerstand 19 und die Widerstandssonde 1 entladen. Umgekehrt erfolgt zuvor die Aufladung des Speicherkondensators 7 ebenfalls über den Widerstand 19, wodurch höherfrequente Störungen unterdrückt werden können.

In der Schaltungsanordnung nach Figur 5 werden gegenüber derjenigen nach Figur 3 folgende Bedingungen eingehalten: Der Widerstandswert $R_2$ des Widerstands ist wesentlich größer als derjenige der Widerstandssonde, beispielsweise $R_2$ = 100 k$\Omega$ gegenüber dem Sondenwiderstand von etwa 15 $\Omega$. Die ausgeschaltete Konstantstromquelle erzeugt keinen wesentlichen Reststrom, der zu einer Offset-Spannung an der Sonde führt. Die Zuleitungen zu der Meßsonde sind relativ kurz, um keine großen Störungen aufzunehmen Die Zeitkonstante T ist klein gegenüber der Zeitkonstanten, mit der sich die Temperatur an der Widerstandssonde ändert.

Die obengenannte Bedingung für die Zeitkonstante T kann durch Wahl des Speicherkondensators 7 mit dem Wert $C_2$ = 100 nF zu dem genannten Widerstandswert von $R_2$ erfüllt werden.

Außerdem sind bei beiden Auswerteschaltungen nach den Figuren 3 und 5 folgende Zusatzforderungen für genaue Messungen zu erfüllen:

1. Die Offset-Spannung des Komparators 14 muß klein sein.

2. Die Restströme insbesondere über den Abtastschalter 4 müssen sehr klein sein.

In der Schaltungsanordnung nach Figur 6 (mit unterbrochener Linie umrahmter Teil) entfällt hingegen die erste Zusatzforderung und die zweite Zusatzforderung ist weniger scharf gestellt:

In der Schaltungsanordnung nach Figur 6 ist nur noch ein einziges Abtast- und Halteglied mit dem Abtastschalter 20 und dem Speicherkondensator 21 vorgesehen. Er hat die Kapazität C. Parallel zu dem Speicherkondensator ist ein Widerstand 22 mit dem Widerstandswert R geschaltet. Dieses Abtast- und Halteglied liegt an dem zweiten Eingang 15 des Komperators 14, dessen erster Eingang 13 mit einer konstanten Referenzspannung $U_{ref}$ beaufschlagt wird. Der Ausgang des Komparators 14 steuert einen voreinstellbaren Rückwärts-Vorwärtszähler 23 über einen Steuereingang 24; der Vorwärts-Rückwärtszähler 23 steht zur Rückstellung mit einer Ablaufsteuerung 25 in Verbindung, die auch den Abtastschalter 20 und den gesteuerten Schalter 3 betätigt.

Die Funktion des bisher beschriebenen Schaltungsteils wird zunächst anhand der Figuren 7, Zeitverläufe 1 und 5, sowie anhand der Figuren 8a und 8b erläutert:

Beim Einschalten des Konstantstroms mit dem Schalter 3 wird zunächst die Anfangsspannung $U_0$ in den

**0 154 716**

Speicherkondensator 21 eingespeichert, indem der Abtastschalter 20 bzw. $S_1$ kurzzeitig ab dem Zeitpunkt to betätigt wird. Danach entlädt sich der Speicherkondensator 21 über den Widerstand 22 mit einer Zeitkonstanten $T = R \cdot C$, bis die Kondensatorspannung an dem Eingang 15 den Wert der Referenzspannung $U_{ref}$ an den Eingang 13 des Komparators 14 erreicht. Dies geschieht zu dem Zeitpunkt $t_{01}$, siehe Figur 8a. Dann gilt

$$t_{01} = T \cdot \ln \frac{U_0}{U_{ref}}$$

Diese Zeit wird in dem Vorwärts-Rückwärtszähler 23, der zunächst auf Null zurückgestellt war, und in dieser Phase durch die Ablaufsteuerung 25 gesteuert rückwärts zählt, als Zahlenwert erfaßt, siehe Figur 8b. Kurz bevor der Konstantstrom durch den Schalter 3 abgeschaltet wird, erfolgt ein analoger Vorgang für die dann erreichte Aufheizspannung $U_1$ durch erneutes kurzzeitiges Betätigen des Abtastschalters 20 bzw. $S_1$ zum Zeitpunkt $t_1$ (siehe Figur 7). Anschließend entlädt sich der Speicherkondensator 21 wiederum nach der bekannten Zeitfunktion über den Widerstand 22 bis zum Erreichen der Referenzspannung. Damit wird die Zeit gebildet

$$t_{02} = T \ln \frac{U_1}{U_{ref}}$$

Während dieser Entladung zählt jedoch der Vorwärts-Rückwärtszähler 23 durch die Ablaufsteuerung 25 gesteuert vorwärts. Somit steht jetzt in dem Vorwärts-Rückwärtszähler 23 eine Zahl gleich der Differenz

$$t_{02} - t_{01} = T \cdot (\ln \frac{U_1}{U_{ref}} - \ln \frac{U_0}{U_{ref}})$$

$$t_{02} - t_{01} = T \cdot \ln \frac{U_1}{U_0}.$$

Daraus ist ersichtlich, daß der Einfluß der Referenzspannung herausfällt, ebenso derjenige einer Offset-Spannung, um die die Referenzspannung größer oder kleiner ist, wenn sich die genannten Spannungen während der Meßzeit von ca. 2 Sekunden nicht ändern.

Um den Einfluß der Zeitkonstanten $T = R \cdot C$ zu kompensieren, kann in der schon angedeuteten Weise ein Referenzspannungsverhältnis gebildet werden, und zwar als Zeitdifferenz $t_4 - t_3$ analog zu der oben beschriebenen Zeitdifferenz $t_{02} - t_{01}$.

Hierzu ist der Schaltungsteil in Figur 6 vorgesehen, der mit der Spannung $U_2$ gespeist wird. Es handelt sich um einen Spannungsteiler mit dem Teilerwiderstand 26 und dem einstellbaren Teilerwiderstand 27. An dem gemeinsamen Verbindungspunkt zwischen beiden Teilerwiderständen ist die Spannung $U_{min}$ abgreifbar. Die Abtastung der Spannung $U_2$ erfolgt mit einem Abtastschalter 28 bzw. $S_2$.

Die Spannung $U_{min}$ wird mit dem Abtastschalter 28' bzw. $S_3$ abgefragt. Die Schalter werden durch die Ablaufsteuerung 25 im Anschluß an die Schalter 3 und $S_1$ betätigt, siehe Impulsdiagramm Figur 7. Durch die Entladung des Kondensator 21 bis zum Erreichen der Referenzspannung $U_{ref}$ ergeben sich dann jeweils folgende Zeiten:

$$t_3 = T \ln \frac{U_2}{U_{ref}}$$

$$t_4 = T \ln \frac{U_{min}}{U_{ref}}$$

Daraus ergibt sich als Differenz und entsprechender Zählwert des Vorwärts-Ruckwartszählers 23:

$$t_4 - t_3 = T \ln \frac{U_2}{U_{min}}$$

Anschließend kann in dem Schaltungsteil "Verarbeitung" in Figur 6 mit dem Bezugszeichen 33 ablaufgesteuert folgender Quotient gebildet werden:

$$\frac{t_{02} - t_{01}}{t_4 - t_3} = \frac{\ln \frac{U_1}{U_0}}{\ln \frac{U_2}{U_{min}}}$$

Damit entfällt der Einfluß von T und das Ausgangssignal für den minimalen Füllstand kann eingestellt werden.

Zur Bildung eines Warnsignals beim Über- oder Unterschreiten eines Warnniveaus kann anschließend eine weitere Größe gebildet werden. Dazu dienen ein weiterer Spannungsteiler, der in Figur 6 mit dem festen Teilerwiderstand 30 und dem einstellbaren Teilerwiderstand 31 aus der Spannung $U_2$ die Spannung $U_W$ bildet, die durch einen Abtastschalter 32 bzw. $S_4$ abtastbar ist und den Speicherkondensator 21 lädt. Es wird durch Laden und Entladen des Speicherkondensators, durch Erfassen der Spannungsgleichheit mit der Referenzspannung an dem Komparator und entsprechendes Rückwärts- und Vorwärtszählen und Quotientenbildung analog zu den vorangehend beschriebenen Vorgängen schließlich folgende Beziehung gebildet, die das Über- oder Unterschreiten eines Warnniveaus signalisiert:

6

$$\frac{(t_5 - t_3)}{(t_4 - t_3)} = \frac{\ln\left(\frac{U_2}{U_W}\right)}{\ln\left(\frac{U_2}{U_{min}}\right)}$$

Durch die Normierung auf $\ln\frac{U_2}{U_{min}}$ ändert sich das Warnniveau nicht, wenn das Ausgangssignal für den minimalen Füllstand abgeglichen wird.

Zu dem Impulsdiagramm gemäß Figur 7 wird noch erläutert, daß in dem Zeitrahmen "Verarbetiung" folgende Vorgänge in einem Funktionsblock 33 außer der voranstehend beschriebenen Normierung durch Quotientenbildung ablaufen: Kennlinienlinearisierung und gleitende Mittelwertbildung. Der Funktionsblock 33 steuert den Funktionsblock 34 mit Ausgangssignalerzeugern für füllstandsproportionale Signale wie Frequenz, Tastverhaltnis, Strom oder Spannung mittels eines Digitalanalogumsetzers. Weiterhin bildet der Ausgangssignalerzeuger Niveauwarnsignale z. B. zur Reservewarnung in Kraftfahrzeugen.

**Patentansprüche**

1. Schaltungsanordnung zur elektrothermischen, Umgebungstemperatur-kompensierten Füllstandmessung mit einer geschalteten Konstantstromquelle an einer Widerstandssonde (1), mit einem Vergleicher, der eine aus einer Anfangsspannung $U_0$ an der Widerstandssonde zu Beginn einer Aufheizzeit gebildete erste Größe mit einer aus einer Aufheizspannung $U_1$ zum Ende einer Aufheizzeit gebildeten zweiten Größe vergleicht, wobei die Bildung wenigstens einer der beiden Größen entsprechend einer durch einen Kondensator (9) und einen Widerstand (10) bestimmten Zeitfunktion erfolgt,
dadurch gekennzeichnet,
daß der Widerstand (10) und der Kondensator (9) Bestandteile eines Integrators (8) sind, dessen Eingang über ein erstes Abtast- und Halte-Glied (4, 5) für die Anfangsspannung $U_0$ mit der Widerstandssonde (1) koppelbar ist und dessen Ausgang mit einem ersten Eingang (13) eines Komparators (14) in Verbindung steht, daß der zweite Eingang (15) des Komparators (14) über ein zweites Abtast- und Halteglied (6, 7) direkt für die Aufheizspannung $U_1$ mit der Wider-Standssonde koppelbar ist und daß mit einem Ausgang des Komparators (14) Mittel zum Erfassen der Zeit zwischen Betätigung des zweiten Abtast- und Haltegliuds (6, 7) und dem Umschalten des Komparators (14) angeschlossen sind.

2. Schaltungsanordnung nach Anspruch 1,
dadurch gekennzeichnet,
daß der Integrator mit einem Operationsverstärker (8) gebildet ist, in dessen Rückkopplungszweig der Kondensator (9) angeordnet ist.

3. Schaltungsanordnung nach Anspruch 1 oder 2,
dadurch gekennzeichnet,
daß der Komparator (14) Bestandteil eines nach dem Sägezahnverfahren arbeitenden Analogdigitalumsetzers ist, der einen voreinstellbaren, mit einer Zählfrequenz beaufschlagbaren, durch den Komparator (14) steuerbaren Rückwärtszähler (17) aufweist

4. Schaltungsanordnung zur elektrothermischen, Umgebungstemperatur-kompensierten Füllstandmessung mit einer geschalteten Konstantstromquelle an einer Widerstandssonde (1), mit einem Vergleicher, der eine aus einer Anfangsspannung $U_0$ an der Widerstandssonde zu Beginn einer Aufheizzeit gebildete erste Größe mit einer aus einer Aufheizspannung $U_1$ zum Ende einer Aufheizzeit gebildeten zweiten Größe vergleicht, wobei die Bildung wenigstens einer der beiden Größen entsprechend einer durch einen Kondensator (7) und einen Wider (19) bestimmten Zeitfunktion erfolgt,
dadurch gekennzeichnet,
daß ein erster Eingang (13) eines Komparators (14) über ein erstes Abtast und Halteglied (4, 5) für die Anfangsspannung $U_0$ mit der Widerstandssonde (1) koppelbar ist, daß der Kondensator (7) Bestandteil eines zweiten Abtast- und Haltegliuds (6, 7) für die Aufheizspannung $U_1$ ist, daß zu dem Kondensator (7) der Widerstand (19), die Aufheizspannung $U_1$ ableitend, parallelgeschaltet ist und daß mit einem Ausgang des Komparators (14) Mittel (17) zum Erfassen der Zeit zwischen Betätigung des zweiten Abtast- und Haltegliuds und dem Umschalten des Komparators angeschlossen sind.

5. Schaltungsanordnung nach Anspruch 4,
dadurch gekennzeichnet,
daß zur Linearisierung der Füllstandmessung die Mittel zur Erfassung der Zeit $t_{02}$ zwischen Entkoppeln des zweiten Abtast- und Haltegliuds (6, 7) und dem Umschalten des Komparators (14) außerdem zum additiven Erfassen des Quadrats der Halbzeit nach der Beziehung

$$t'_{02} = t_{02} + \frac{t_{02}^2}{2}$$

eingerichet sind.

6. Schaltungsanordnung nach Anspruch 4, bei der das zweite Abtast- und Halteglied entfällt und statt dessen der Kondensator (7) über den Widerstand (19) ständig mit der Widerstandssonde (1) in Verbindung steht.

7. Schaltungsanordnung zu elektrothermischen, Umgebungstemperatur-kompensierten Füllstandmessung mit einer geschalteten Konstantstromquelle an einer Widerstandssonde (1), mit einem Vergleicher, der eine aus einer Anfangsspannung $U_0$ an der Widerstandssonde zu Beginn einer Aufheizzeit gebildete erste Größe mit einer aus einer Aufheizspannung $U_1$ zum Ende einer Aufheizzeit gebildeten zweiten Größe vergleicht, wobei die Bildung wenigstens einer der beiden Größen entsprechend einer durch einen Kondensator (21) und einen Widerstand (22) bestimmen Zeitfunktion erfolgt,
dadurch gekennzeichnet,
daß ein erster Eingang (15) eines Komparators (14) an dem Kondensator (21) sowohl für die Anfangsspannung $U_0$ als auch für die Aufheizspannung $U_1$ zu unterschiedlichen Zeitpunkten $t_0$ und $t_{11}$ mit der Widerstandssonde (1) über einen ersten Abtastschalter (20) koppelbar ist, daß zu dem Kondensator (21) der die Spannung $U_0$ bzw. $U_1$ ableitende Widerstand (22) parallelgeschaltet ist, daß an einem zweiten Eingang (13) des Komparators (14) eine konstante Referenzspannung $U_{ref}$ liegt und daß der Ausgang des Komparators (14) an einem Steuereingang (24) eines rückstellbaren, mit einer Zählfrequenz beaufschlagbaren Vorwärts-Rückwärtszählers (23) angeschlossen ist, daß der Vorwärts-Rückwärtszähler während des Entladens bis $t_{01}$ des auf die Spannung $U_0$ geladenen Kondensators bis zum Erreichen der Referenzspannung in einer ersten Richtung zählt und anschließend während des Entladens bis $t_{12}$ des auf die Spannung $U_1$ geladenen Kondensators bis zum Erreichen der Referenzspannung in einer entgegengesetzten Richtung differenzbildend $t_{12} - t_{01}$ zählt.

8. Schaltungsanordnung nach Anspruch 7,
dadurch gekennzeichnet,
daß das Ausgangssignal für den minimalen Füllstand an einen mit einer festen Spannung $U_2$ gespeisten Spannungsteiler (26, 27) einstellbar ist, daß ein zweiter Abtastschalter (28) den Kondensator (21) mit der minimalen Spannung $U_{min}$ koppelt und ein dritter Abtastschalter (32) den Kondensator mit der festen, höheren Spannung $U_2$ koppelt, daß der Vorwärts-Rückwärtszähler (23) im Anschluß an die Differenzbildung $t_{12} - t_{01}$ und Rückstellung während des Entladens $t_3$ des auf die Spannung $U_{min}$ geladenen Kondensators bis zum Erreichen der Referenzspannung $U_{ref}$ in einer ersten Richtung zählt und anschließend während des Entladens $t_4$ des auf die Spannung $U_2$ geladenen Kondensators bis zum Erreichen der Referenzspannung in einer entgegengesetzten Richtung differenzbildend $t_4 - t_3$ zählt, und daß der jeweilige Zählerstand auf Mittel zur Quotientenbildung (33)

$$> r \frac{(t_{12} - t_{01})}{(t_4 - t_3)}$$

übertragbar ist.

9. Schaltungsanordnung nach Anspruch 8,
dadurch gekennzeichnet,
daß ein weiterer Spannungsteiler (30, 31) an der festen Spannung $U_2$ auf eine Warnspannung $U_W$ zum Auslösen einer Warnfunktion abgleichbar ist, daß nach Bildung der Differenzen $t_{12} - t_{01}$ und $t_4 - t_3$ der Spannungsteiler (30, 31) über einen vierten Abtastschalter (32) mit der Warnspannung $U_W$ zur Bildung der Differenz $t_5 - t_3$ beaufschlagbar ist und daß die Mittel zur Quotientenbildung zusätzlich zur Bildung des Quotienten

$$\frac{(t_5 - t_3)}{(t_4 - t_3)}$$

eingerichtet sind.

**Claims**

1. Circuit arrangement for electrothermal level measurement with ambient temperature compensation, with a switched constant current source at a resistor probe (1), with a comparator which compares a first quantity formed from an initial voltage $U_0$ at the resistor probe at the beginning of a heating-up time with a second quantity formed from a heating-up voltage $U_1$ at the end of a heating-up time, the forming of at least one of the two quantities being effected in accordance with a time function defined by a capacitor (9) and a resistor (10), characterised in that the resistor (10) and the capacitor (9) are components of an integrator (8) whose input is couplable by way of a first scanning and holding element (4, 5) for the initial voltage $U_0$ with the resistor probe (1), and whose output is connected with a first input (13) of a comparator (14), that the second input (15) of the comparator (14) is couplable via a second scanning and holding element (6, 7) to the resistor probe directly for the heating-up voltage $U_1$, and that means for detecting the time between actuation of the second scanning and holding element (6, 7) and the switching-over of the comparator (14) are connected to one output of the comparator (14).

2. Circuit arrangement according to claim 1, characterised in that the integrator is formed with an operational amplifier (8) in whose feedback branch the capacitor (9) is arranged.

3. Circuit arrangement according to claim 1 or 2, characterised in that the comparator (14) is a component of analog-to-digital converter operating with the sawtooth method and having a presettable reverse counter (17) to which a counting frequency can be fed and which is controllable by the comparator (14).

4. Circuit arrangement for electrothermal level measurement with ambient temperature compensation, with a switched constant current source at a resistor probe (1), with a comparator which compares a first quantity formed from an initial voltage $U_0$ at the resistor probe at the beginning of a heating-up time with a second quantity formed from a heating-up voltage $U_1$ at the end of a heating-up time, the forming of at least one of the two quantities being effected in accordance with a time function defined by a capacitor (7) and a resistor (19), characterised in that a first input (13) of a comparator (14) is couplable via a first scanning and holding element (4, 5) for the initial voltage $U_0$ with the resistor probe (1), that the capacitor (7) is a component of a second scanning and holding element (6, 7) for the heating-up voltage $U_1$, that the resistor (19) is connected in parallel with the capacitor (7), discharging the heating-up voltage $U_1$, and that means (17) for ascertaining the time between the actuation of the second scanning and holding element and the changing-over of the comparator (14) are connected to one output of the comparator (14).

5. Circuit arrangement according to claim 4, characterised in that for linearising the level measuring the means for ascertaining the time $t_{02}$ between the uncoupling of the second scanning and holding element (6, 7) and the changing-over of the comparator (14) are also adapted to effect the additive ascertaining of the square of half the time in accordance with the equation

$$t'_{02} = t_{02} + \frac{t_{12}^2}{2}.$$

6. Circuit arrangement according to claim 4, wherein the second scanning and holding element is omitted and instead the capacitor (7) is constantly connected to the resistor probe (1) via the resistor (19).

7. Circuit arrangement for electrothermal level measurement with ambient temperature compensation, with a switched constant current source at a resistor probe (1), with a comparator which compares a first quantity formed from an initial voltage $U_0$ at the resistor probe at the beginning of a heating-up time with a second quantity formed from a heating-up voltage $U_1$ at the end of a heating-up time, the forming of at least one of the two quantities being effected in accordance with a time function defined by a capacitor (21) and a resistor (22), characterised in that a first input (15) of a comparator (14) at the capacitor (21) is couplable both for the initial voltage $U_0$ and also for the heating-up voltage $U_1$, at different points in time $t_0$ and $t_{11}$ with the resistor probe (1) through a first scanning switch (20), that the resistor (22) discharging the voltage $U_0$ or $U_1$ is connected in parallel with the capacitor (21), that a constant reference voltage $U_{ref}$ is present at a second input (13) of the comparator (14), and that the output of the comparator (14) is connected to a control input (24) of a resettable forward and reverse counter (23) to which a counting frequency can be supplied, that the forward and reverse counter counts in a first direction during the discharge as far as $t_{01}$ of the capacitor charged to voltage $U_0$ until the reference voltage is reached, and then counts in an opposite direction and forms a difference $t_{12} - t_{01}$ during the discharge to $t_{12}$ of the capacitor charged to voltage $U_1$ until the reference voltage is reached.

8. Circuit arrangement according to claim 7, characterised in that the output signal for the minimum filling level is adjustable at a voltage divider (26, 27) supplied with a fixed voltage $U_2$, that a second scanning switch (28) couples the capacitor (21) with the minimum voltage $U_{min}$, and a third scanning switch (32) couples the capacitor with the fixed higher voltage $U_2$, that the forward and reverse counter (23) following the forming of the difference $t_{12} - t_{01}$ and resetting counts in a first direction during the discharge $t_3$ of the capacitor charged to voltage $U_{min}$ until reference voltage is reached, and then counts in an opposite direction, forming the difference $t_4 - t_3$ during the discharge $t_4$ of the capacitor charged to voltage $U_2$ until the reference voltage is reached, and that the respective counter state is transferable to means (33) for forming a quotient

$$\frac{(t_{12} - t_{01})}{(t_4 - t_3)}.$$

9. Circuit arrangement according to claim 8, characterised in that a further voltage divider (30, 31) at the fixed voltage $U_2$ is adjustable to a warning voltage $U_W$ for triggering a warning function, that after the forming of the differences $t_{12} - t_{01}$ and $t_4 - t_3$ the voltage divider (30, 31) can be supplied by means of a fourth scanning switch (32) with the warning voltage $U_W$ for forming the difference $t_5 - t_3$ and that the means for quotient forming (33) are additionally adapted to form the quotient

$$\frac{(t_5 - t_3)}{(t_4 - t_3)}.$$

## Revendications

1. Circuit pour la mesure électro-thermique, compensée en fonction de la température ambiante, du niveau de remplissage, comportant une source de courant constant branchée sur une sonde (1) à résistance, un dispositif de comparaison, qui compare une première grandeur constituée par une tension initiale $U_0$ sur la sonde à résistance au début d'un temps d'échauffement, avec une deuxième grandeur constituée par une tension $U_1$ d'échauffement à la fin d'un temps d'échauffement, la formation d'au moins une des deux grandeurs s'effectuant selon une fraction du temps déterminée par un condensateur (9) et une résistance (10), circuit caractérisé par le fait que la résistance (10) et le condensateur (9) font partie d'un intégrateur (8) dont l'entrée peut être raccordée à la sonde (1) à résistance par l'intermédiaire d'un organe (4, 5) de détection et de maintien de la tension initiale $U_0$, et dont la sortie est reliée à une première entrée (13) d'un dispositif (14) de comparaison, que la deuxième entrée (15) du dispositif (14) de comparaison peut être raccordée par un second organe (6, 7) de détection et de maintien directement pour la tension $U_1$ d'échauffement à la sonde (1) à résistance et qu'à une sortie du dispositif (14) de comparaison, des moyens sont raccordés pour la saisie du temps qui s'écoule entre l'actionnement du deuxième organe (6, 7) de détection et de maintien et la commutation de l'organe (14) de comparaison.

2. Circuit caractérisé par le fait que l'intégrateur est formé par un amplificateur opérationnel (8) dans la branche de réaction duquel est disposé le condensateur (9).

3. Circuit selon la revendication 1 ou 2, caractérisé par le fait que le dispositif (14) de comparaison fait partie d'un convertisseur analogique-numérique travaillant selon le processus "en dents de scie", qui présente un compteur à rebours (17) réglable préalablement, pouvant être soumis à une fréquence de comptage et pouvant être commandé par le dispositif (14) de comparaison.

4. Circuit pour la mesure électro-thermique compensée en fonction de la température ambiante du niveau de remplissage, circuit comportant une source de courant constant branchée sur une sonde (1) à résistance, un dispositif de comparaison, qui compare une première grandeur constituée à partir d'une tension initiale $U_0$ sur la sonde à résistance au début d'un temps d'échauffement avec une seconde grandeur constituée à partir d'une tension $U_1$ d'échauffement à la fin d'un temps d'échauffement, la formation d'au moins une des deux grandeurs s'effectuant selon une fonction du temps déterminée par un condensateur (7) et une résistance (19), circuit caractérisé par le fait qu'une première entrée (13) d'un dispositif (14) de comparaison peut être branchée par l'intermédiaire d'un premier organe (4, 5) de détection et de maintien de la tension initiale $U_0$ avec la sonde (1) à résistance; que le condensateur (7) fait partie d'un deuxième organe (6, 7) de détection et de maintien de la tension $U_1$ d'échauffement, que la résistance qui dérive la tension $U_1$ d'échauffement est branchée en parallèle par rapport au condensateur (7) et qu'à une sortie du dispositif (14) de comparaison sont branchés des moyens (17) pour la saisie du temps qui s'écoule entre l'actionnement du deuxième organe de détection et de maintien et la commutation du dispositif de comparaison.

5. Circuit selon la revendication 4, caractérisé par le fait que, pour la linéarisation de la mesure du niveau de remplissage, les moyens de saisie du temps $t_{02}$ qui s'écoule entre le débranchement du deuxième organe (6, 7) de détection et de maintien et la commutation du dispositif (14) de comparaison, sont en outre placés pour la saisie additive du carré de la moitié du temps, selon la relation:

$$t'_{02} = t_{02} + \frac{t_{02}^2}{2}.$$

6. Circuit selon la revendication 4, dans lequel le deuxième organe de détection et de maintien est éliminé et dans lequel, au lieu de cela, le condensateur (7) est en liaison permanente, par l'intermédiaire de la résistance (19) avec la sonde (1) à résistance.

7. Circuit pour la mesure électro-thermique compensée en fonction de la température ambiante du niveau de remplissage, circuit comportant une source de courant constant branchée sur une sonde (1) à résistance, un dispositif de comparaison qui compare une première grandeur formée à partir d'une tension initiale $U_0$ sur la sonde à résistance au début d'un temps d'échauffement, avec une deuxième grandeur, formée à partir d'une tension $U_1$ d'échauffement à la fin d'un temps d'échauffement, la formation d'au moins l'une des deux grandeurs s'effectuant selon une fonction du temps déterminée par un condensateur (21) et une résistance (22), circuit caractérisé par le fait qu'une première entrée (15) d'un dispositif (14) de comparaison peut être branchée au condensateur (21) aussi bien pour la tension initiale $U_0$ que pour la tension $U_1$ d'échauffement, à des moments différents $t_0$ et $t_{11}$ avec la sonde (1) à résistance par l'intermédiaire d'un premier interrupteur (20) de détection, que la résistance (22) qui dérive la tension $U_0$, ou la tension $U_1$, est montée en parallèle par rapport au condensateur, qu'une tension de référence $U_{ref}$ constante est appliquée sur une deuxième entrée (13) du dispositif (14) de comparaison et que la sortie du dispositif (14) de comparaison est raccordée à une entrée (24) de commande d'un compteur (23) fonctionnant dans les deux sens, susceptible d'être soumis à une fréquence de comptage, que le compteur fonctionnant dans les deux sens compte dans un premier sens pendant la décharge, jusqu'à $t_{01}$, du condensateur chargé avec la tension $U_0$ jusqu'à ce que la tension de référence soit atteinte et ensuite compte dans le sens opposé, en formant la différence $t_{12} - t_{01}$ pendant la décharge jusqu'à $t_{12}$, du condensateur chargé avec la tension $U_1$ jusqu'à ce que la tension de référence soit atteinte.

8. Circuit selon la revendication 7, caractérisé par le fait que le signal de sortie indiquant le niveau minimum de remplissage peut être réglé sur un répartiteur (26, 27) de tension alimenté par une tension fixe $U_2$, qu'un deuxième interrupteur (28) de détection branche le condensateur (21) sur la tension minimale $U_{min}$ et qu'un troisième interrupteur (32) de détection branche le condensateur sur une tension fixe $U_2$ plus élevée, que le compteur (23) fonctionnant dans les deux sens compte dans un premier sens, après la création de la différence $t_{12} - t_{01}$ et recule pendant la décharge $t_3$ du condensateur chargé avec la tension $U_{min}$ jusqu'à ce que la tension de référence $U_{ref}$ soit atteinte et compte ensuite dans le sens opposé pendant le temps $t_4$ de décharge du condensateur chargé avec la tension $U_2$ jusqu'à ce que la tension de référence soit atteinte, en créant la différence $t_4 - t_3$, et que la situation ou l'état à tout moment du compteur peut être reporté sur le moyen (33) destiné à la création du quotient

# 0 154 716

$$\frac{(t_{12} - t_{01})}{(t_4 - t_3)}.$$

9. Circuit selon la revendication 8, caractérisé par le fait qu'un autre répartiteur (30, 31) de tension, placé sous la tension fixe $U_2$, peut être taré pour l'émission d'une tension d'avertissement $U_W$, qu'après établissement des différences $t_{12} - t_{01}$ et $t_4 - t_3$ le répartiteur (30, 31) de tension peut être soumis, par l'intermédiaire d'un quatrième interrupteur (32) de détection, à la tension d'avertissement $U_W$ pour la création de la différence $t_5 - t_3$ et que des moyens (33) destinés à l'établissement de quotient, sont placés en outre pour la création du quotient

$$\frac{(t_5 - t_3)}{(t_4 - t_3)}.$$

11

FIG. 1

FIG. 2

FIG. 3

FIG. 4

FIG. 5

FIG. 6

FIG. 7

Verarbeitung

5

FIG. 8a

FIG. 8b